# EUROPEAN PATENT APPLICATION

(11) **EP 3 410 770 A1**
(43) Date of publication of application: **05.12.2018**
(21) Application number: 17744602.8
(22) Date of filing: 26.01.2017
(51) Int. Cl.: H04W 28/02, H04W 4/24, H04W 88/08, H04W 88/16

(54) **DATA TRANSMISSION METHOD, BASE STATION, DATA TRANSMISSION METHOD AND CORE NODE**

(30) Priority: 28.01.2016 US 201662287908 P; 01.02.2016 US 201662289340 P
(71) Applicant: LG Electronics Inc., Seoul 07336 (KR)
(72) Inventor: CHUN, Sungduck, Seoul 06772 (KR)
(74) Representative: Katérle, Axel
(86) International application number: PCT/KR2017/000975
(87) International publication number: WO 2017/131481

(57) **Abstract**

A base station provides a core node with information on the type of radio access technology and/or radio band used for transmission/reception of data for a user equipment. A billing system provided in the core node or connected to the core node may change the billing depending on the type of radio access technology and/or radio band used for transmission/reception of data.

## Description

### Technical Field

The present invention relates to a wireless communication system and, more particularly, to a method and apparatus for transmitting/receiving data.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

With appearance and spread of machine-to-machine (M2M) communication and a variety of devices such as smartphones and tablet PCs and technology demanding a large amount of data transmission, data throughput needed in a cellular network has rapidly increased. To satisfy such rapidly increasing data throughput, carrier aggregation technology, cognitive radio technology, etc. for efficiently employing more frequency bands and multiple input multiple output (MIMO) technology, multi-base station (BS) cooperation technology, etc. for raising data capacity transmitted on limited frequency resources have been developed.

In addition, a communication environment has evolved into increasing density of nodes accessible by a user at the periphery of the nodes. A node refers to a fixed point capable of transmitting/receiving a radio signal to/from the UE through one or more antennas. A communication system including high-density nodes may provide a better communication service to the UE through cooperation between the nodes.

### Disclosure

### Technical Problem

Due to introduction of new radio communication technology, the number of user equipments (UEs) to which a BS should provide a service in a prescribed resource region increases and the amount of data and control information that the BS should transmit to the UEs increases. Since the amount of resources available to the BS for communication with the UE(s) is limited, a new method in which the BS efficiently receives/transmits uplink/downlink data and/or uplink/downlink control information using the limited radio resources is needed.

According to the present invention, there is a need for a method of charging a user differently according to radio technologies used for a communication operator to transmit/receive data to an apparatus simultaneously using/supporting different radio access technologies/resources.

According to the present invention, there is a need for a method of efficiently controlling a load applied to a user equipment (UE) according to the type of radio access technology and/or radio band.

The technical objects that can be achieved through the present invention are not limited to what has been particularly described hereinabove and other technical objects not described herein will be more clearly understood by persons skilled in the art from the following detailed description.

### Technical Solution

According to an aspect of the present invention, provided is a method of transmitting data by a base station to a user equipment (UE) in a wireless communication system. The method includes receiving downlink data for the UE from a core node, transmitting the downlink data to the UE in at least one of a licensed band and an unlicensed band, and sending, to the core node, information on the amount of data transmitted in the licensed band or the amount of data transmitted in the unlicensed band among the downlink data.

According to another aspect of the present invention, provided is a method of transferring data by a code node to a base station in a wireless communication system. The method includes transferring downlink data for a user equipment (UE) to the base station, and receiving, from the base station, information on the amount of data transmitted in a licensed band or the amount of data transmitted in an unlicensed band among the downlink data.

According to another aspect of the present invention, provided is a base station for transmitting data to a user equipment (UE) in a wireless communication system. The base station includes a transceiver and a processor configured to control the transceiver. The processor is configured to control the transceiver to transmit downlink data for the UE received from a core node to the UE in at least one of a licensed band and an unlicensed band and to control the transceiver to send, to the core node, information on the amount of data transmitted in the licensed band or the amount of data transmitted in the unlicensed band among the downlink data.

According to another aspect of the present invention, provided is a core node for transferring data to a base station in a wireless communication system. The core node includes a transceiver and a processor configured to control the transceiver. The processor is configured to control the transceiver to transfer downlink data for a user equipment (UE) to the base station and to control the transceiver to receive, from the base station, information on the amount of data transmitted in a licensed band or the amount of data transmitted in an unlicensed band among the downlink data.

In each aspect of the present invention, the core node may be provided with radio access technology information indicating radio access technology applied to the data transmitted in the unlicensed band.

In each aspect of the present invention, the radio access technology information may include information on the amount of data transmitted using LTE or Wi-Fi in the unlicensed band.

In each aspect of the present invention, the core node may be a packet data network gateway (P-GW).

In each aspect of the present invention, the core node may be associated with a charging system.

The above technical solutions are merely some parts of the embodiments of the present invention and various embodiments into which the technical features of the present invention are incorporated can be derived and understood by persons skilled in the art from the following detailed description of the present invention.

### Advantageous Effects

According to the present invention, uplink/downlink signals can be efficiently transmitted/received. Therefore, overall throughput of a radio communication system can be improved.

According to the present invention, it is possible to charge differently according to wireless technology used for a communication operator to transmit/receive data to an apparatus simultaneously using/supporting different radio access technologies/resources.

According to the present invention, it is possible to efficiently control a load applied to a user equipment (UE) according to the type of radio access technology and/or radio band.

It will be appreciated by persons skilled in the art that that the effects that can be achieved through the present invention are not limited to what has been particularly described hereinabove and other advantages of the present invention will be more clearly understood from the following detailed description.

### Brief Description of the Drawings

FIG. 1 is a schematic diagram showing the structure of an evolved packet system (EPS) including an evolved packet core (EPC).
FIG. 2 is a diagram exemplarily illustrating architectures of a general E-UTRAN and EPC.
FIG. 3 is a diagram exemplarily illustrating the structure of a radio interface protocol in a control plane.
FIG. 4 is a diagram exemplarily illustrating the structure of a radio interface protocol in a user plane.
FIG. 5 is a diagram illustrating LTE (Long Term Evolution) protocol stacks for a user plane and a control plane.
FIG. 6 is a flow diagram illustrating a random access procedure.
FIG. 7 is a diagram illustrating a connection procedure in a radio resource control (RRC) layer.
FIG. 8 illustrates the flow of (downlink/uplink) signals between a UE and network node(s) in a conventional system.
FIG. 9 illustrates the flow of (downlink/uplink) signals between a UE and network node(s) in an improved system, to which the present invention is applied.
FIG. 10 illustrates a data transmission/reception process according to the present invention.
FIG. 11 shows another example of a data transmission/reception process according to the present invention.
FIG. 12 illustrates a node device according to an embodiment of the present invention.

### Mode for Carrying Out the Invention

Although the terms used in the present invention are selected from generally known and used terms while considering functions of the present invention, they may vary according to intention or customs of those skilled in the art or emergence of new technology. Some of the terms mentioned in the description of the present invention may have been selected by the applicant at his or her discretion, and in such cases the detailed meanings thereof will be described in relevant parts of the description herein. Thus, the terms used in this specification should be interpreted based on the substantial meanings of the terms and the whole content of this specification rather than their simple names or meanings.

The embodiments of the present invention described hereinbelow are combinations of elements and features of the present invention. The elements or features may be considered selective unless mentioned otherwise. Each element or feature may be practiced without being combined with other elements or features. Further, an embodiment of the present invention may be constructed by combining parts of the elements and/or features. Operation orders described in embodiments of the present invention may be rearranged. Some constructions or features of any one embodiment may be included in another embodiment and may be replaced with corresponding constructions or features of another embodiment.

In the description of the attached drawings, a detailed description of known procedures or steps of the present invention will be avoided lest it should obscure the subject matter of the present invention. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a" (or "an"), "one", "the", etc. may include a singular representation and a plural representation in the context of the present invention (more particularly, in the context of the following claims) unless indicated otherwise in the specification or unless context clearly indicates otherwise.

The embodiments of the present invention can be supported by standard specifications disclosed for at least one of wireless access systems including an institute of electrical and electronics engineers (IEEE) 802.xx, a 3rd generation partnership project (3GPP) system, a 3GPP Long Term Evolution (3GPP LTE) system, and a 3GPP2 system. That is, steps or parts that are not described to clarify the technical features of the present invention may be explained with reference to the above standard specifications.

In addition, all terms set forth herein may be explained by the above standard specifications. For example, one or more of standard specifications, such as 3GPP TS 36.211, 3GPP TS 36.213, 3GPP TS 36.321, 3GPP TS 36.322, 3GPP TS 36.323, 3GPP TS 36.331, 3GPP TS 23.203, 3GPP TS 23.401, 3GPP TS 24.301, 3GPP TS 23.228, 3GPP TS 29.228, 3GPP TS 23. 218, 3GPP TS 22.011, and 3GPP TS 36.413 may be referenced.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the invention.

Specific terms used for the embodiments of the present invention are provided to aid in understanding of the present invention. These specific terms may be replaced with other terms within the scope and spirit of the present invention.

The terms used in this specification are defined as follows.
- IMS (IP Multimedia Subsystem or IP Multimedia Core Network Subsystem): An architectural framework for providing standardization for delivery of voice or other multimedia services over Internet protocol (IP).
- UMTS (Universal Mobile Telecommunications System): Global System for Mobile Communication (GSM)-based 3rd generation mobile communication technology developed by 3 GPP.
- EPS (Evolved Packet System): A network system configured by an EPC (Evolved Packet Core), which is an Internet Protocol (IP)-based packet switched (PS) core network and an access network such as LTE, UTRAN, etc. The EPS is evolved from UMT.
- NodeB: A base station of GERAN/UTRAN which is installed outdoors and has coverage of a macro cell scale.
- eNodeB/eNB: A base station of E-UTRAN which is installed outdoors and has coverage of a macro cell scale.
- UE (User Equipment): A user equipment. The UE may be referred to as a terminal, ME (Mobile Equipment), MS (Mobile Station), or the like. The UE may be a portable device such as a notebook computer, cellular phone, PDA (Personal Digital Assistant), smartphone, and multimedia device, or may be a nonportable device such as a PC (Personal Computer) and vehicle-mounted device. The term UE or terminal in the description of MTC may refer to an MTC device.
- HNB (Home NodeB): A base station of a UMTS network. The HNB is installed indoors and has coverage of a micro cell scale.
- HeNB (Home eNodeB): A base station of an EPS network. The HeNB is installed indoors and has coverage of a micro cell scale.
- MME (Mobility Management Entity): A network node of the EPS network performing functions of Mobility Management (MM) and Session Management (SM).
- PDN-GW (Packet Data Network-Gateway)/PGW/P-GW: A network node of the EPS network performing functions of UE IP address allocation, packet screening and filtering, and charging data collection.
- SGW (Serving Gateway)/S-GW: A network node of the EPS network performing functions of mobility anchor, packet routing, idle mode packet buffering, and triggering of the MME paging the UE.
- PCRF (Policy and Charging Rule Function): A network node of the EPS network making a policy decision for dynamically applying a differentiated QoS and charging policy on a service flow basis.
- OMA DM (Open Mobile Alliance Device Management): A protocol designed for management of mobile devices such as a cellular phone, a PDA, and a portable computer, that performs functions of device configuration, firmware upgrade, and error report.
- OAM (Operation Administration and Maintenance): A group of network management functions that provides network defect indication, performance information, and data and diagnosis functions.
- NAS (Non-Access Stratum): An upper stratum of a control plane between the UE and the MME. The NAS is a functional layer for signaling between a UE and a core network and exchange of a traffic message between the UE and the core network in LTE/UMTS protocol stack. The NAS mainly functions to support UE mobility and a session management procedure for establishing and maintaining IP connection between a UE and a P-GW.
- EMM (EPS Mobility Management): A sub-layer of a NAS layer, that may be in either an "EMM-Registered" or "EMM-Deregistered" state depending on whether a UE is attached to or detached from a network.
- ECM (EMM Connection Management) connection: A signaling connection for exchange of a NAS message, established between the UE and an MME. The ECM connection is a logical connection consisting of an RRC connection between the UE and an eNB and an S1 signaling connection between the eNB and the MME. If the ECM connection is established/terminated, the RRC connection and the S1 signaling connection are all established/terminated as well. To the UE, an established ECM connection means having an RRC connection established with the eNB and, to the MME, the established ECM connection means having an SI signaling connection established with the eNB. Depending on whether a NAS signaling connection, i.e., the ECM connection, is established, ECM may be in either "ECM-Connected" or "ECM-Idle" state.
- AS (Access-Stratum): This includes a protocol stack between the UE and a wireless (or access) network and is in charge of data and network control signal transmission.
- NAS configuration MO (Management Object): An MO used in the process of configuring parameters related to NAS functionality for the UE.
- PDN (Packet Data Network): A network where a server (e.g., an MMS (Multimedia Messaging Service) server, a WAP (Wireless Application Protocol) server, etc.) supporting a specific service is located.
- PDN connection: A logical connection between a PDN and a UE represented by one IP address (one IPv4 address and/or one IPv6 prefix).
- APN (Access Point Name): A text sequence for indicating or identifying a PDN. A requested service or network is accessed through a specific P-GW. The APN means a predefined name (text sequence) in a network so as to discover this P-GW. (e.g., internet.mnc012.mcc345.gprs).
- RAN (Radio Access Network): A unit including a NodeB, an eNodeB and an RNC (Radio Network Controller) for controlling the NodeB and the eNodeB in a 3GPP network. The RAN is present between UEs and provides connection to the core network.
- HLR (Home Location Register)/HSS(Home Subscriber Server): A database containing subscriber information of a 3GPP network. The HSS can perform functions such as configuration storage, identity management and user state storage.
- PLMN (Public Land Mobile Network): A network configured for the purpose of providing mobile communication services to individuals. This network can be configured per operator.
- ANDSF (Access Network Discovery and Selection Function): One network entity that provides a policy to discover and select access that the UE can use with respect to each service provider.
- EPC path (or infrastructure data path): A user plane communication path through an EPC.
- E-RAB (E-UTRAN Radio Access Bearer): Concatenation of an S1 bearer and a data radio bearer corresponding to the S1 bearer. If the E-RAB is present, there is one-to-one mapping between the E-RAB and an EPS bearer of a NAS.
- GTP (GPRS Tunneling Protocol): A group of IP-based communication protocols used to carry a general packet radio service (GPRS) within GSM, UMTS, and LTE networks. In 3GPP architectures, GTP and proxy mobile IPv6 based interfaces are specified on various interface points. The GTP can be decomposed into some protocols (e.g., GTP-C, GTP-U, and GTP'). GTP-C is used within a GPRS core network for signaling between gateway GPRS support nodes (GGSN) and serving GPRS support nodes (SGSN). GTP-C allows the SGSN to activate a session on a user's behalf (e.g., PDN context activation), deactivate the same session, adjust quality of service parameters, or update a session for a subscriber that has just arrived from another SGSN. GTP-U is used to carry user data within the GPRS core network and between a radio access network and a core network.
- Cell as radio resource: A 3GPP LTE/LTE-A system uses the concept of a cell in order to manage radio resources, and the cell associated with the radio resources is distinguished from a cell of a geographical region. The "cell" associated with the radio resources is defined as a combination of downlink (DL) resources and uplink (UL) resources, that is, a combination of a DL carrier and a UL carrier. The cell may be configured by DL resources alone or a combination of DL resources and UL resources. If carrier aggregation is supported, linkage between the carrier frequency of DL resources and the carrier frequency of UL resources may be indicated by system information. Here, the carrier frequency means the center frequency of each cell or carrier. In particular, a cell operating on a primary frequency is referred to as a primary cell (Pcell) and a cell operating on a secondary frequency is referred to as a secondary cell (Scell). The Scell means a cell which may be configured after radio resource control (RRC) connection establishment and may be used to provide additional radio resources. According to UE capabilities, the Scell and the Pcell may form a set of serving cells for the UE. In the case of a UE which is in an RRC _CONNECTED state but is not configured with the carrier aggregation or does not support carrier aggregation, there is only one serving cell configured as the Pcell. Meanwhile, the "cell" of the geographical region may be understood as coverage capable of providing a service using a carrier, and the "cell" of the radio resources is associated with bandwidth (BW) which is a frequency range configured by the carrier. Since downlink coverage, which is a range within which a node may transmit a valid signal, and uplink coverage, which is a range capable of receiving a valid signal from a UE, depends on a carrier carrying the signal, the coverage of the node is associated with the coverage of the "cell" of the radio resource used by the node. Accordingly, the term cell may sometimes be used to denote the coverage of the service by the node, may sometimes be used to denote radio resources and may sometimes be used to denote a range which a signal using the radio resources can reache with a valid strength.

The EPC is a core element of system architecture evolution (SAE) for improving performance of 3GPP technology. SAE corresponds to a research project for determining a network structure supporting mobility between various types of networks. For example, SAE aims to provide an optimized packet-based system for supporting various radio access technologies and providing an enhanced data transmission capability.

Specifically, the EPC is a core network of an IP mobile communication system for 3GPP LTE and can support real-time and non-real-time packet-based services. In conventional mobile communication systems (i.e. second-generation or third-generation mobile communication systems), functions of a core network are implemented through a circuit-switched (CS) sub-domain for voice and a packet-switched (PS) sub-domain for data. However, in a 3GPP LTE system which is evolved from the third generation communication system, CS and PS sub-domains are unified into one IP domain. That is, in 3GPP LTE, connection of terminals having IP capability can be established through an IP-based business station (e.g., an eNodeB (evolved Node B)), EPC, and an application domain (e.g., IMS). That is, the EPC is an essential structure for end-to-end IP services.

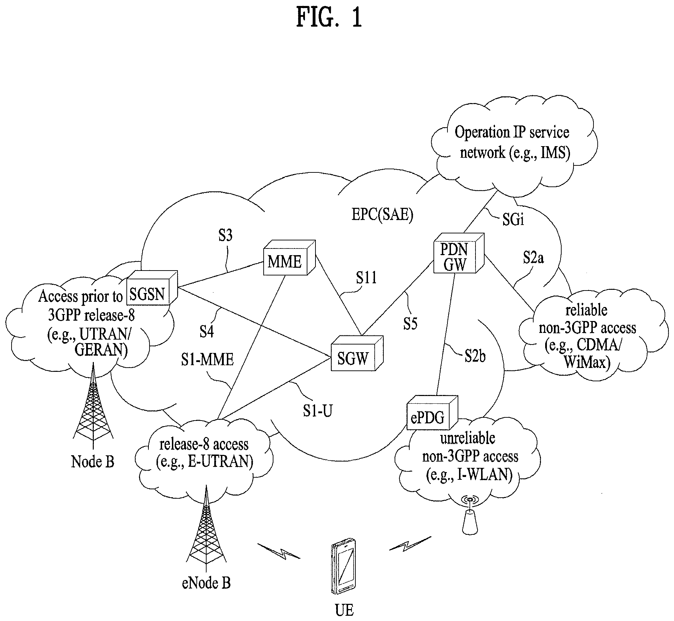

The EPC may include various components. FIG. 1 shows some of the components, namely, a serving gateway (SGW), a packet data network gateway (PDN GW), a mobility management entity (MME), a serving GPRS (general packet radio service) supporting node (SGSN) and an enhanced packet data gateway (ePDG).

The SGW (or S-GW) operates as a boundary point between a radio access network (RAN) and a core network and maintains a data path between an eNodeB and the PDN GW. When. When a terminal moves over an area served by an eNodeB, the SGW functions as a local mobility anchor point. That is, packets. That is, packets may be routed through the SGW for mobility in an evolved UMTS terrestrial radio access network (E-UTRAN) defined after 3GPP release-8. In addition, the SGW may serve as an anchor point for mobility of another 3GPP network (a RAN defined before 3GPP release-8, e.g., UTRAN or GERAN (global system for mobile communication (GSM)/enhanced data rates for global evolution (EDGE) radio access network).

The PDN GW (or P-GW) corresponds to a termination point of a data interface for a packet data network. The PDN GW may support policy enforcement features, packet filtering and charging support. In addition, the PDN GW may serve as an anchor point for mobility management with a 3GPP network and a non-3GPP network (e.g., an unreliable network such as an interworking wireless local area network (I-WLAN) and a reliable network such as a code division multiple access (CDMA) or WiMax network.

Although the SGW and the PDN GW are configured as separate gateways in the example of the network structure of FIG. 1, the two gateways may be implemented according to a single gateway configuration option.

The MME performs signaling and control functions for supporting access of a UE for network connection, network resource allocation, tracking, paging, roaming and handover. The MME controls control plane functions associated with subscriber and session management. The MME manages numerous eNodeBs and signaling for selection of a conventional gateway for handover to other 2G/3G networks. In addition, the MME performs security procedures, terminal-to-network session handling, idle terminal location management, etc.

The SGSN handles all packet data such as mobility management and authentication of a user for other 3GPP networks (e.g., a GPRS network).

The ePDG serves as a security node for a non-3GPP network (e.g., an I-WLAN, a Wi-Fi hotspot, etc.).

As described above with reference to FIG. 1, a terminal having IP capabilities may access an IP service network (e.g., an IMS) provided by an operator via various elements in the EPC not only based on 3GPP access but also on non-3GPP access.

Additionally, FIG. 1 shows various reference points (e.g. S1-U, S1-MME, etc.). In 3GPP, a conceptual link connecting two functions of different functional entities of an E-UTRAN and an EPC is defined as a reference point. Table 1 is a list of the reference points shown in FIG. 1. Various reference points may be present in addition to the reference points in Table 1 according to network structures.

**Table 1**

| Reference Point | Description |
|---|---|
| S1-MME | Reference point for the control plane protocol between E-UTRAN and MME. |
| S1-U | Reference point between E-UTRAN and Serving GW for the per bearer user plane tunneling and inter eNB path switching during handover. |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS Core and the 3GPP Anchor function of Serving GW. In addition, if Direct Tunnel is not established, it provides the user plane tunnelling. |
| S5 | It provides user plane tunnelling and tunnel management between Serving GW and PDN GW. It is used for Serving GW relocation due to UE mobility and if the Serving GW needs to connect to a non-collocated PDN GW for the required PDN connectivity. |
| S11 | Reference point between MME and Serving GW. |
| SGi | It is the reference point between the PDN GW and the packet data network. Packet data network may be an operator external public or private packet data network or an intra operator packet data network, e.g. for provision of IMS services. This reference point corresponds to Gi for 3GPP accesses.) |

Among the reference points shown in FIG. 1, S2a and S2b correspond to non-3GPP interfaces. S2a is a reference point which provides reliable non-3GPP access and related control and mobility support between PDN GWs to a user plane. S2b is a reference point which provides related control and mobility support between the ePDG and the PDN GW to the user plane.

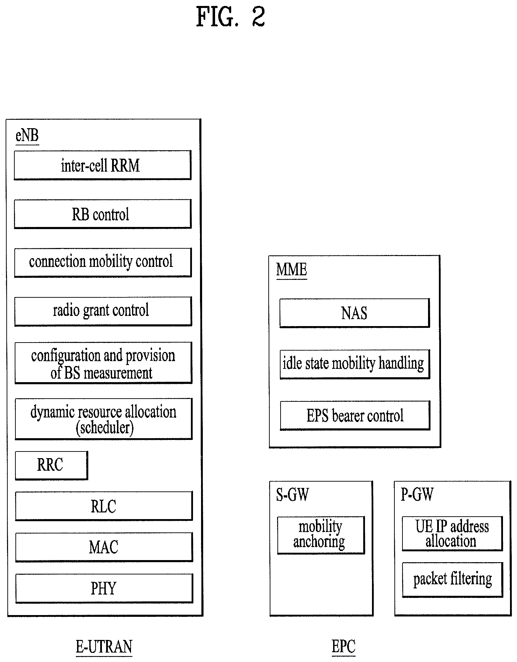

FIG. 2 is a diagram exemplarily illustrating architectures of a typical E-UTRAN and EPC.

As shown in the figure, while radio resource control (RRC) connection is activated, an eNodeB may perform routing to a gateway, scheduling transmission of a paging message, scheduling and transmission of a broadcast channel (BCH), dynamic allocation of resources to a UE on uplink and downlink, configuration and provision of eNodeB measurement, radio bearer control, radio admission control, and connection mobility control. In the EPC, paging generation, LTE_IDLE state management, ciphering of the user plane, SAE bearer control, and ciphering and integrity protection of NAS signaling.

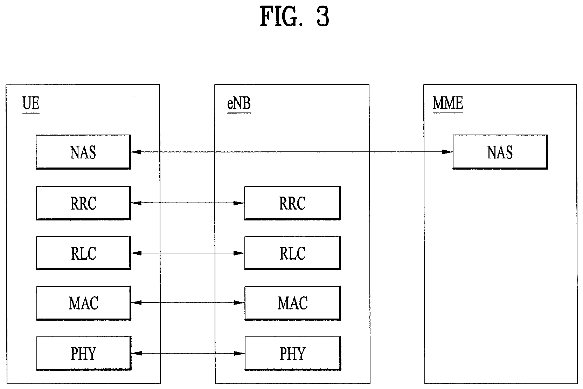

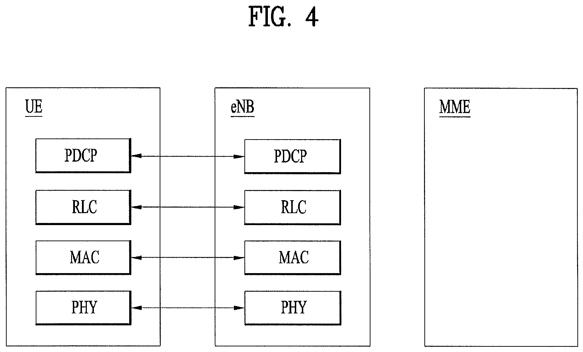

FIG. 3 is a diagram exemplarily illustrating the structure of a radio interface protocol in a control plane between a UE and an eNB, and FIG. 4 is a diagram exemplarily illustrating the structure of a radio interface protocol in a user plane between the UE and the eNB.

The radio interface protocol is based on the 3GPP wireless access network standard. The radio interface protocol horizontally includes a physical layer, a data link layer, and a networking layer. The radio interface protocol is divided into a user plane for transmission of data information and a control plane for delivering control signaling which are arranged vertically.

The protocol layers may be classified into a first layer (LI), a second layer (L2), and a third layer (L3) based on the three sublayers of the open system interconnection (OSI) model that is well known in the communication system.

Hereinafter, description will be given of a radio protocol in the control plane shown in FIG. 3 and a radio protocol in the user plane shown in FIG. 4.

The physical layer, which is the first layer, provides an information transfer service using a physical channel. The physical channel layer is connected to a medium access control (MAC) layer, which is a higher layer of the physical layer, through a transport channel. Data is transferred between the physical layer and the MAC layer through the transport channel. Transfer of data between different physical layers, i.e., a physical layer of a transmitter and a physical layer of a receiver is performed through the physical channel.

The physical channel consists of a plurality of subframes in the time domain and a plurality of subcarriers in the frequency domain. One subframe consists of a plurality of symbols in the time domain and a plurality of subcarriers. One subframe consists of a plurality of resource blocks. One resource block consists of a plurality of symbols and a plurality of subcarriers. A Transmission Time Interval (TTI), a unit time for data transmission, is 1 ms, which corresponds to one subframe.

According to 3GPP LTE, the physical channels present in the physical layers of the transmitter and the receiver may be divided into data channels corresponding to Physical Downlink Shared Channel (PDSCH) and Physical Uplink Shared Channel (PUSCH) and control channels corresponding to Physical Downlink Control Channel (PDCCH), Physical Control Format Indicator Channel (PCFICH), Physical Hybrid-ARQ Indicator Channel (PHICH) and Physical Uplink Control Channel (PUCCH).

The second layer includes various layers. First, the MAC layer in the second layer serves to map various logical channels to various transport channels and also serves to map various logical channels to one transport channel. The MAC layer is connected with an RLC layer, which is a higher layer, through a logical channel. The logical channel is broadly divided into a control channel for transmission of information of the control plane and a traffic channel for transmission of information of the user plane according to the types of transmitted information.

The radio link control (RLC) layer in the second layer serves to segment and concatenate data received from a higher layer to adjust the size of data such that the size is suitable for a lower layer to transmit the data in a radio interface.

The Packet Data Convergence Protocol (PDCP) layer in the second layer performs a header compression function of reducing the size of an IP packet header which has a relatively large size and contains unnecessary control information, in order to efficiently transmit an IP packet such as an IPv4 or IPv6 packet in a radio interface having a narrow bandwidth. In addition, in LTE, the PDCP layer also performs a security function, which consists of ciphering for preventing a third party from monitoring data and integrity protection for preventing data manipulation by a third party.

The Radio Resource Control (RRC) layer, which is located at the uppermost part of the third layer, is defined only in the control plane, and serves to configure radio bearers (RBs) and control a logical channel, a transport channel, and a physical channel in relation to reconfiguration and release operations. The RB represents a service provided by the second layer to ensure data transfer between a UE and the E-UTRAN.

If an RRC connection is established between the RRC layer of the UE and the RRC layer of a wireless network, the UE is in the RRC Connected mode. Otherwise, the UE is in the RRC Idle mode.

Hereinafter, description will be given of the RRC state of the UE and an RRC connection method. The RRC state refers to a state in which the RRC of the UE is or is not logically connected with the RRC of the E-UTRAN. The RRC state of the UE having logical connection with the RRC of the E-UTRAN is referred to as an RRC_CONNECTED state. The RRC state of the UE which does not have logical connection with the RRC of the E-UTRAN is referred to as an RRC_IDLE state. A UE in the RRC_CONNECTED state has RRC connection, and thus the E-UTRAN may recognize presence of the UE in a cell unit. Accordingly, the UE may be efficiently controlled. On the other hand, the E-UTRAN cannot recognize presence of a UE which is in the RRC_IDLE state. The UE in the RRC_IDLE state is managed by a core network in a tracking area (TA) which is an area unit larger than the cell. That is, for the UE in the RRC_IDLE state, only presence or absence of the UE is recognized in an area unit larger than the cell. In order for the UE in the RRC_IDLE state to be provided with a usual mobile communication service such as a voice service and a data service, the UE should transition to the RRC_CONNECTED state. A TA is distinguished from another TA by a tracking area identity (TAI) thereof. A UE may configure the TAI through a tracking area code (TAC), which is information broadcast from a cell.

When the user initially turns on the UE, the UE searches for a proper cell first. Then, the UE establishes RRC connection in the cell and registers information thereabout in the core network. Thereafter, the UE stays in the RRC_IDLE state. When necessary, the UE staying in the RRC_IDLE state selects a cell (again) and checks system information or paging information. This operation is called camping on a cell. Only when the UE staying in the RRC IDLE state needs to establish RRC connection, does the UE establish RRC connection with the RRC layer of the E-UTRAN through the RRC connection procedure and transition to the RRC_CONNECTED state. The UE staying in the RRC_IDLE state needs to establish RRC connection in many cases. For example, the cases may include an attempt of a user to make a phone call, an attempt to transmit data, or transmission of a response message after reception of a paging message from the E-UTRAN.

The non-access stratum (NAS) layer positioned over the RRC layer performs functions such as session management and mobility management.

Hereinafter, the NAS layer shown in FIG. 3 will be described in detail.

The ESM (Evolved Session Management) belonging to the NAS layer performs functions such as default bearer management and dedicated bearer management to control a UE to use a PS service from a network.. The UE is assigned a default bearer resource by a specific packet data network (PDN) when the UE initially accesses the PDN. In this case, the network allocates an available IP to the UE to allow the UE to use a data service. The network also allocates QoS of a default bearer to the UE. LTE supports two kinds of bearers. One bearer is a bearer having characteristics of guaranteed bit rate (GBR) QoS for guaranteeing a specific bandwidth for transmission and reception of data, and the other bearer is a non-GBR bearer which has characteristics of best effort QoS without guaranteeing a bandwidth. The default bearer is assigned to a non-GBR bearer. The dedicated bearer may be assigned a bearer having QoS characteristics of GBR or non-GBR.

A bearer allocated to the UE by the network is referred to as an evolved packet service (EPS) bearer. When the EPS bearer is allocated to the UE, the network assigns one ID. This ID is called an EPS bearer ID. One EPS bearer has QoS characteristics of a maximum bit rate (MBR) and/or a guaranteed bit rate (GBR).

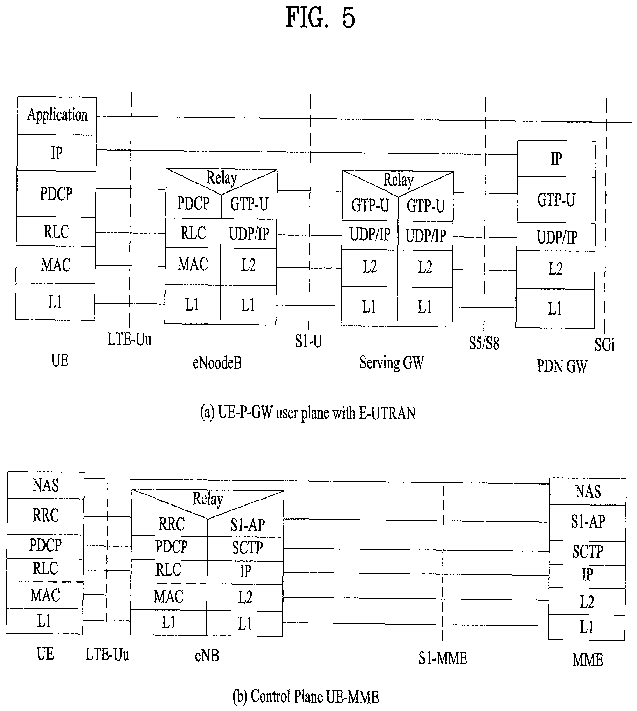

FIG. 5 illustrates LTE protocol stacks for a user plane and a control plane. FIG. 5(a) illustrates user plane protocol stacks over UE-eNB-SGW-PGW-PDN and FIG. 5(b) illustrates control plane protocol stacks over UE-eNB-MME-SGW-PGW. Functions of key layers of the protocol stacks will now be briefly described below.

Referring to FIG. 5(a), a GTP-U protocol is used to forward user IP packets over an S1-U/S5/X2 interface. If a GTP tunnel is established to forward data during LTE handover, an end marker packet is transferred to the GTP tunnel as the last packet.

Referring to FIG. 5(b), an S1-AP protocol is applied to an S1-MME interface. The S1-AP protocol supports functions such as S1 interface management, E-RAB management, NAS signaling delivery, and UE context management. The Sl-AP protocol transfers an initial UE context to the eNB in order to set up E-RAB(s) and then manages modification or release of the UE context. A GTP-C protocol is applied to S11/S5 interfaces. The GTP-C protocol supports exchange of control information for generation, modification, and termination of GTP tunnel(s). The GTP-C protocol generates data forwarding tunnels in the case of LTE handover.

A description of the protocol stacks and interfaces illustrated in FIGs. 3 and 4 is applicable to the same protocol stacks and interfaces illustrated in FIG. 5.

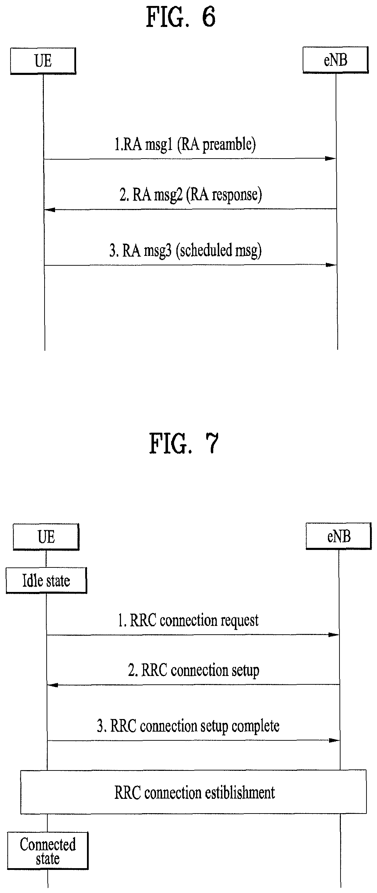

FIG. 6 is a flowchart illustrating a random access procedure in 3GPP LTE.

The random access procedure is used for a UE to obtain UL synchronization with a base station or to be assigned a UL radio resource.

The UE receives a root index and a physical random access channel (PRACH) configuration index from an eNB. Each cell has 64 candidate random access preambles defined by a Zadoff-Chu (ZC) sequence. The root index is a logical index used for the UE to generate 64 candidate random access preambles.

Transmission of a random access preamble is limited to a specific time and frequency resources for each cell. The PRACH configuration index indicates a specific subframe and preamble format in which transmission of the random access preamble is possible.

The random access procedure, in particular, a contention-based random access procedure, includes the following three steps. Messages transmitted in the following steps 1, 2, and 3 are referred to as msg1, msg2, and msg4, respectively.
> 1. The UE transmits a randomly selected random access preamble to the eNodeB. The UE selects a random access preamble from among 64 candidate random access preambles and the UE selects a subframe corresponding to the PRACH configuration index. The UE transmits the selected random access preamble in the selected subframe.
> 2. Upon receiving the random access preamble, the eNB sends a random access response (RAR) to the UE. The RAR is detected in two steps. First, the UE detects a PDCCH masked with a random access (RA)-RNTI. The UE receives an RAR in a MAC (medium access control) PDU (protocol data unit) on a PDSCH indicated by the detected PDCCH. The RAR includes timing advance (TA) information indicating timing offset information for UL synchronization, UL resource allocation information (UL grant information), and a temporary UE identifier (e.g., a temporary cell-RNTI (TC-RNTI)).
> 3. The UE may perform UL transmission according to resource allocation information (i.e., scheduling information) and a TA value in the RAR. HARQ is applied to UL transmission corresponding to the RAR. Accordingly, after performing UL transmission, the UE may receive reception response information (e.g., a PHICH) corresponding to UL transmission.

FIG. 7 illustrates a connection procedure in a radio resource control (RRC) layer.

As shown in FIG. 7, the RRC state is set according to whether or not RRC connection is established. An RRC state indicates whether or not an entity of the RRC layer of a UE has logical connection with an entity of the RRC layer of an eNB. An RRC state in which the entity of the RRC layer of the UE is logically connected with the entity of the RRC layer of the eNB is called an RRC connected state. An RRC state in which the entity of the RRC layer of the UE is not logically connected with the entity of the RRC layer of the eNB is called an RRC idle stat.

A UE in the connected state has RRC connection, and thus the E-UTRAN may recognize presence of the UE in a cell unit. Accordingly, the UE may be efficiently controlled. On the other hand, the eNB cannot recognize presence of a UE which is in the idle state. The UE in the idle state is managed by the core network in a tracking area unit which is an area unit larger than the cell. The tracking area is a unit of a set of cells. That is, for the UE which is in the idle state, only presence or absence of the UE is recognized in a larger area unit. In order for the UE in the idle state to be provided with a usual mobile communication service such as a voice service and a data service, the UE should transition to the connected state.

When the user initially turns on the UE, the UE searches for a proper cell first, and then stays in the idle state. Only when the UE staying in the idle state needs to establish RRC connection, does the UE establish RRC connection with the RRC layer of the eNB through the RRC connection procedure and then transition to the RRC connected state.

The UE staying in the idle state needs to establish RRC connection in many cases. For example, the cases may include an attempt of a user to make a phone call, an attempt to transmit data, or transmission of a response message after reception of a paging message from the E-UTRAN.

In order for the UE in the idle state to establish RRC connection with the eNodeB, the RRC connection procedure needs to be performed as described above. The RRC connection procedure is broadly divided into transmission of an RRC connection request message from the UE to the eNB, transmission of an RRC connection setup message from the eNB to the UE, and transmission of an RRC connection setup complete message from the UE to eNB, which are described in detail below with reference to FIG. 7.
> 1. When the UE in the idle state desires to establish RRC connection for reasons such as an attempt to make a call, a data transmission attempt, or a response of the eNB to paging, the UE transmits an RRC connection request message to the eNB first.
> 2. Upon receiving the RRC connection request message from the UE, the eNB accepts the RRC connection request of the UE when the radio resources are sufficient, and then transmits an RRC connection setup message, which is a response message, to the UE.
> 3. Upon receiving the RRC connection setup message, the UE transmits an RRC connection setup complete message to the eNB.

Only when the UE successfully transmits the RRC connection setup complete message, does the UE establish RRC connection with the eNB and transition to the RRC connected mode.

In order for the UE of an idle state to transition to an activation state in which traffic transmission/reception can be performed due to occurrence of new traffic, a service request procedure is performed. If traffic to be transmitted by the UE occurs or traffic to be transmitted to the UE by a network occurs in a state in which the UE is registered with the network but an S1 connection is released and a wireless resource is not allocated to the UE due to traffic inactivation, i.e., in a state in which the UE is in an EMM registered state (EMM-Registered) but is in an ECM-Idle state, the UE requests that the network provide a service. Upon successfully completing the service request process, the UE transitions to an ECM connected state (ECM-Connected) and configures an ECM connection (RRC connection + S1 signaling connection) in a control plane and an E-RAB (a data radio bearer (DRB) and an S1 bearer) in a user plane, thereby transmitting/receiving traffic. If the network desires to transfer traffic to the UE of an ECM idle state (ECM-Idle), the network informs the UE, through a paging message, that there is traffic to be transmitted so that the UE may request that the network provide a service.

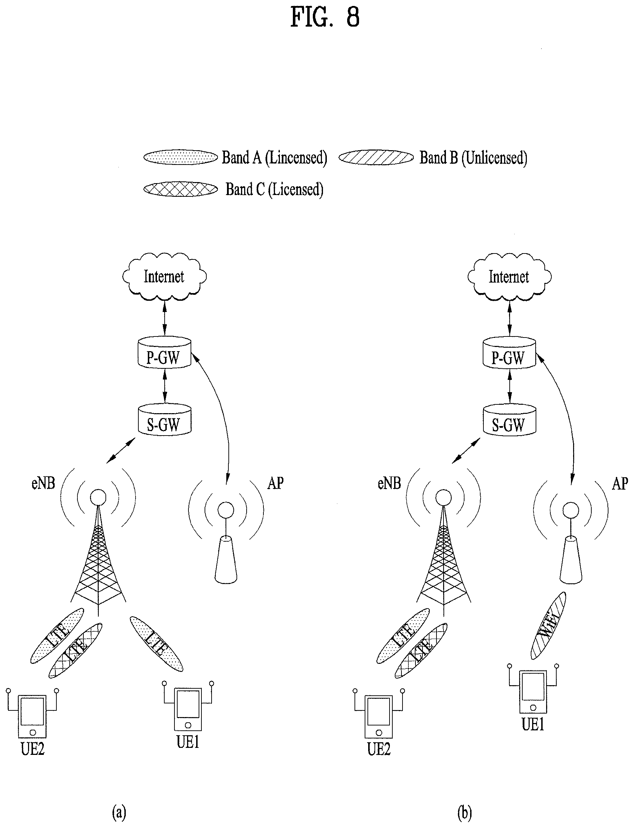

FIG. 8 illustrates the flow of (downlink/uplink) signals between a UE and network node(s) in a conventional system.

In the case of downlink signal transfer, a P-GW sends a signal, which will be sent using the LTE technology, to an S-GW/eNB and sends a signal, which will be sent using the Wi-Fi technology, to a Wi-Fi access point (AP) (without passing through the S-GW and the eNB). A UE receives the signal for the UE using the LTE technology in one or more licensed bands or receives the signal for the UE using the Wi-Fi technology in an unlicensed band.

In the case of uplink signal transfer, a signal using the LTE technology is transmitted to the P-GW through the eNB and the S-GW in the licensed band and a signal using the Wi-Fi technology is transmitted to the P-GW through the AP (without passing through the eNB and the S-GW) in the unlicensed band.

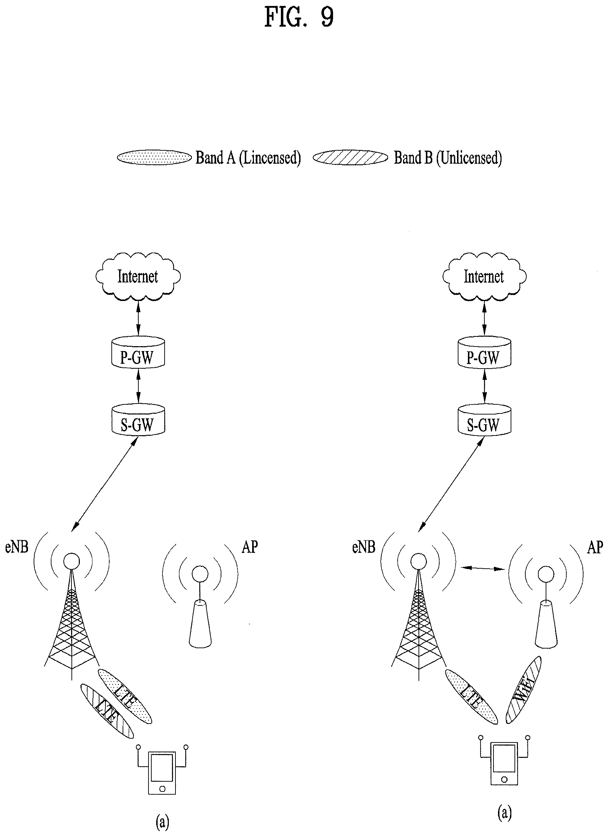

FIG. 9 illustrates the flow of (downlink/uplink) signals between a UE and network node(s) in an improved system, to which the present invention is applied. In particular, FIG. 9(a) illustrates the concept of licensed assisted access (LAA) and FIG. 9(b) illustrates the concept of LTE-WLAN aggregation (LWA).

In a current Wi-Fi system, an unlicensed band which is not dedicated to a particular operator is used for communication. In the case where a predetermined criterion, for example, technology which does not cause or minimizes interference on a radio channel, is employed and less than certain output power is used, any radio technology may be used on such an unlicensed band. Accordingly, there is a movement to apply technology used in a current cellular network to the unlicensed band, which is referred to as LAA. As the number of users using mobile data explosively increases as compared with frequencies (that is, licensed band(s)) currently occupied by wireless communication operators, introduction of LAA to the LTE system is being considered in order to increase user satisfaction by providing services in an unlicensed band. According to the LAA, the LTE radio frequencies may be extended to a frequency band which is not specified by 3GPP, that is, an unlicensed band. The WLAN band may be an unlicensed band to which the LAA can be applied.

Referring to FIG. 9(a), if a band A which is a licensed band for a UE and a band B which is an unlicensed band are aggregated for the UE, an eNB may transmit a downlink signal to the UE using the LTE technology in the band A which is the licensed band or in the band B which is the unlicensed band B. Similarly, if the band A which is the licensed band for the UE and the band B which is the unlicensed band are aggregated for the UE, an uplink signal transmitted from the UE to the network may be transmitted from the UE to the eNB (or the remote radio header (RRH)/remote radio unit (RRU) of the eNB) using the LTE technology in the band A which is the licensed band or in the band B which is the unlicensed band B.

Meanwhile, in the existing LTE system, even when a plurality of frequency bands is aggregated for communication with the UE, uplink/downlink communication between the UE and the network node was performed using only the LTE technology in the plurality of frequency bands. In other words, a communication link which may be simultaneously used by the UE at different frequencies was only an LTE link. As another method of reducing congestion in the licensed band, it is considered that communication between the UE and the network node is performed at different frequencies using the LTE technology and the Wi-Fi technology simultaneously. Such technology is referred to as LWA. According to the LWA, the WLAN radio spectrum and the LTE radio spectrum are used for communication of a WLAN AP and an LTE node (e.g., eNB, RRH, RRU, etc.) with the UE.

Referring to FIG. 9(b), the eNB may directly transmit a downlink signal for the UE to the UE or may transfer the downlink signal for the UE to the AP using the LTE technology in the band A which is the licensed band configured for the UE. The eNB may send LTE data to the AP and control the AP. The AP may transmit the downlink signal for the UE to the UE using the Wi-Fi technology in the band B which is the unlicensed band, under control of the eNB. Similarly, if the band A which is the licensed band and the band B which is the unlicensed band are configured for the UE, the UE may directly transmit an uplink signal to the eNB using the LTE technology in the band A or transmit the uplink signal to the AP using the Wi-Fi technology in the band B. The AP transfers the uplink signal received from the UE to the eNB which controls the AP.

When the unlicensed band is used for communication together with the licensed band, the operator may consider the following scenarios:
- cellular technology (e.g., LTE) is used in the frequency allocated thereto and cellular technology is also used in the unlicensed band (see FIG. 9(a)); and
- cellular technology (e.g., LTE) is used in the frequency allocated thereto and Wi-Fi technology is used in the unlicensed band (see FIG. 9(b)).

In either case, the operator may attempt to simultaneously use two technologies. However, the operator pays a lot of money in order to acquire the frequency allocated thereto but does not pay for frequency allocation in the unlicensed band. Accordingly, when providing services to customers, the operator may want to make a charge for service provision in the frequencies allocated thereto (hereinafter, licensed band or LB) and a charge for service provision in the unlicensed band (hereinafter, UB).

However, according to the structure of LAA/LWA, the eNB directly exchanges data with the UE through a cellular technology in the LB and, at the same time, exchanges data with the UE through the AP connected to the eNB using the Wi-Fi technology. However, up to now, in order for the eNB to most rapidly provide data to the UE, since only the quality of the radio channel is considered upon determining which technology is used with respect to the UE, the user of the UE has to pay more radio data charges than necessary.

That is, according to the current standard technology, a charge is made in a core (e.g., P-GW), only the amount of data is calculated, and technology used between the eNB and the UE is not considered (see sections 5.3.6 and 5.7A of 3GPP TS 23.401, and 3GPP TS 23.203). In addition, when data transmission/reception was performed using the Wi-Fi technology in the past, a charge is not made when the data uses the local GW (L-GW) but does not pass through the core (P-GW). For example, assume that, among downlink data packets 1, 2, 3, 4 and 5 for the UE, downlink data packets 1 to 3 are transmitted/received in the licensed band and the downlink data packets 4 and 5 are transmitted/received in the unlicensed band. In the current LTE network, since a charge is made in the P-GW, referring to FIG. 8, according to the current system, among downlink data packets 1 to 5, downlink data packets 1 to 3 are branched from the P-GW which is a charging node to the eNB and downlink data packets 4 and 5 are branched to the AP. Accordingly, the P-GW, which is the charging node, may confirm how many data packets are used for the licensed band of the LTE network and exclude the data packets to be transmitted in the unlicensed band from the charge. In contrast, referring to FIG. 9, since the P-GW sends all downlink data packets 1, 2, 3, 4 and 5 to the S-GW and the eNB and the eNB allocates the downlink data packets 1, 2, 3, 4 and 5 to the licensed band and the unlicensed band, the P-GW cannot calculate an accurate charge for the UE and cannot perform quota deduction.

The present invention proposes a system and method for charging a user differently according to the used radio technology with respect to an apparatus simultaneously using/supporting a cellular based radio technology such as LTE and a radio technology such as Wi-Fi. According to the present invention, it is possible to efficiently control a load applied to a UE according to types of radio access technologies and/or radio bands.

For reference, according to the current standard technology, a P-GW collects or processes information on a charge and a charging system stores actual charging information. In general, since the P-GW cannot store all charging information generated for one month, the P-GW generates/processes the charging information and the charging system performs actual storage and conversion into a rate. The P-GW and the charging system may be physically unified. In the present invention, the charging node may mean a node including the charging system or a node connected to the charging system. Hereinafter, in the present invention, assume that the P-GW is a charging node. However, the present invention associated with the P-GW is applicable to a network node having a charging function regardless of the name thereof. Accordingly, the charging node may be an existing P-GW or a node having a charging function or connected to a charging system, such as a local GW (L-GW). In addition, although the present invention is described on the assumption that communication using LTE technology is performed through the charging GW, the present invention is applicable to the case where LTE communication using the unlicensed band is performed through the charging GW.

The present invention proposes exchange of information on the radio access technology for processing traffic between network nodes such that the eNB efficiently performs scheduling for the UE. For example, information on the radio access technology may include the following information.
* information on radio access technology (e.g., LTE, Wi-Fi, etc.) allowed to be used by the UE:
information on whether data is transmitted/received using only LTE when the eNB exchanges data with the UE;
information on whether data is transmitted/received using only Wi-Fi when the eNB exchanges data with the UE; and/or
information on whether data is transmitted/received using only the LB or the UB when the eNB exchanges data with the UE.
* information on a radio frequency/band allowed to be used by the UE.
* the amount of data capable of being used by the UE with respect to a combination of the radio access technology and the radio frequency/band:
the total amount of data capable of being transmitted to the UE using the LTE technology through the LB or the UB on downlink or uplink; and/or
the total amount of data capable of being transmitted to the UE using the Wi-Fi technology through the LB or the UB on downlink or uplink.
* Criterion for checking and reporting an event in association with data transmission/reception of the UE:
information on how much data should be transmitted before transmitting a report to an MME or an S-GW, when the eNB exchanges data with the UE; and/or
information on how much data should be transmitted before transmitting a report to the MME or the S-GW according to downlink/uplink, LTE technology/Wi-Fi technology, or LB/UB, when the eNB exchanges data with the UE.

For example, if the total amount of data exchanged between the eNB and the UE reaches the total amount of data allowed to be transmitted, information on the radio access technology may be transferred when the MME transfers the context of the UE to the eNB. The eNB, each network node or the UE, which has received the information, operates according to the information as described above.

Meanwhile, in an existing LTE system, downlink data, which has arrived at the P-GW, is transferred to the eNB through the S-GW and the uplink data transmitted by the UE is transmitted to the P-GW through the eNB and the S-GW. In this process, data filtering, packet classification, and charging information management are performed by the S-GW or the P-GW. However, when data transmission to the UE using a cellular technology such as LTE reaches a predetermined limit (e.g., data quota), if the UE may use Wi-Fi or the UB, data transmission to the UE should not be blocked or filtered. Accordingly, the present invention proposes exchange of information on radio access between the eNB and the S-GW/P-GW such that the S-GW or the P-GW appropriately determines data processing. Whenever the P-GW or the S-GW transfers user data packets to the eNB, the P-GW or the S-GW may exchange information on radio access together with the data packets. The information on radio access may include the following information.
* radio access technology information which may be used when the data packets are transferred to the UE: for example, information on whether the eNB should use LTE only or Wi-Fi only.
* information on the frequency band which may be used when the data packets are transferred to the UE: for example, information on whether the eNB should use the LB only or the UB only.
* information on resources used for the data packets in an actual radio interface: for example, the eNB transfers information on the amount of data packets transferred to the user to the S-GW, the P-GW or the MME using LTE or Wi-Fi, whenever a predetermined criterion is satisfied. For example, the eNB transfers, to the S-GW, the P-GW or the MME, the information on the amount of data packets transferred through the LB or the UB to the user, whenever a predetermined criterion is satisfied.

Based on the information on radio access, the P-GW or the S-GW may change information on data transmitted on downlink. For example, the P-GW or the S-GW may instruct the eNB not to use specific radio access technology or a specific frequency for data transfer. Alternatively, the P-GW or the S-GW may mark the information transferred together with the data packets in consideration of the above situation. In this case, the P-GW or the S-GW may transfer a command to the eNB through the MME. Whenever the eNB receives uplink user data packets from the UE and transmits the uplink user data packets to the P-GW/S-GW, the following information may be transferred together with each data packet.
* radio access technology information used when the data packets are received from the UE: for example, information on whether the packets are received from the UE using LTE or Wi-Fi.
* information on the frequency band used when the data packets are received from the UE: for example, information on whether the packets are received from the UE using the LB or the UB.

Based on the afore-mentioned radio access related information, the P-GW or the S-GW may instruct to no longer use LTE when the amount of data allocated to a certain UE which may be transferred using LTE is exceeded. The eNB, each network node or the UE, which has received the radio access related information, operates according to the information.

The UE should determine whether the UE has exhausted radio data transmission/reception quota through the cellular radio access technology or the LB and inform the user of whether the UE has exhausted the radio data transmission/reception quota through the cellular radio access technology or the LB. For example, the UE may inform the user of information as to whether there is an available UB. If LTE and LAA/LWA are simultaneously used, the UE may display LTE and LAA/LWA to the user. For example, the UE displays a signal indicating the cellular network and a signal indicating Wi-Fi on a display apparatus. Alternatively, if LAA, for example, cellular communication using the UB, is used, the UE displays LAA on the display apparatus of the UE. The eNB may signal information as to whether each cell supports LAA/LWA through system information block (SIB) or RRC signaling. For example, the eNB may inform the UE attached thereto that a cell operating in the unlicensed band is set as a serving cell for the UE.

The UE may use the UB or Wi-Fi technology even when the cellular radio resource quota thereof has been exhausted and the UE may access the network using the remaining UB or Wi-Fi quota when the UB or W-Fi quota remains. For this, the UE may transfer information on a preferred connection method in an RRC connection procedure with the eNB or in a service request procedure (see section 5.3.4 of 3GPP TS 23.401) with the MME. The information on the connection method preferred by the UE may include the following information.
* radio access technology information to be used for the UE to transmit the data packets: for example, information as to whether only LTE is used, only Wi-Fi is used or which of LTE or Wi-Fi is preferred.
* information on the frequency band to be used for the UE to transmit the data packets: for example, information as to whether only the LB is used, whether only the UB is used or which of the LB and the UB is preferred.

The eNB or the MME may establish a connection with the UE based on the information on the connection method preferred by the UE. The eNB or the MME may inform the UE of the result of establishment. For example, the eNB or the MME may inform the UE of whether LTE and/or Wi-Fi are used for actual user data transmission/reception. For example, the eNB or the MME may inform the UE of whether the LB and/or the UB are used for actual user data transmission/reception. In other words, the UE informs the network that the UE wants to perform data transmission using another radio technology B when accessing the network using a specific radio technology A. For example, the UE performs a radio connection process of LTE and then receives a control signal through LTE while performing data transmission/reception using the Wi-Fi radio technology through the eNB instead of LTE. The eNB, each network node or UE, which has received the information on the connection method preferred by the UE, operates according to the information.

In the case of a VoIP call such as a VoLTE call which passes through a path of P-GW <-> S-GW <-> eNB <-> UE, for the purpose of stable service management and QoS control, information on which radio access technology is used to transmit the VoLTE call is required in an IMS network or a core network and thus control thereof is necessary. For an EPS bearer, the eNB may utilize information as to whether the data of the EPS bearer is transmitted using Wi-Fi or LTE or whether any radio technology may be used. For this, the MME transfers information on the EPS bearer to be established with respect to the eNB and provides information on a preferred radio access technology (e.g., LTE or Wi-Fi) and information on a preferred radio band (e.g., LB or UB) with respect to the EPS bearer. As another method, the eNB may perform an establishment or reestablishment with respect to each EPS bearer and inform the MME, the S-GW, the P-GW, the PCRF, the CSCF or the PCEF of information as to which radio access technology (e.g., LTE, Wi-Fi, etc.) is used for transmission of the EPS bearer. In the above procedure, the eNB may transfer the information on the EPS bearer directly or indirectly through other nodes. The proposal of the present invention is similarly applicable to a radio bearer which connects the eNB with the UE, instead of the EPS bearer which connects the UE with the P-GW. Such information transfer may be performed not only in the MME, the S-GW, the P-GW, the PCRF, the CSCF or the PCEF but also in IMS nodes (e.g., P-CSCF, S-CSCF, I-CSCF, etc.) or AS nodes (e.g., application nodes located at the upper end of the core network). The information of the above process, for example, information on the type of the used band (e.g., LB or UB) or used radio access technology, may be additionally transferred for each service provided in the IMS domain. Examples of the service provided through the IMS domain include a voice call service through IMS voice call (MMTEL Voice) and a video call service provided through IMS video call (MMTel Video) IMS. The information of the above process is not collectively specified with respect to all services provided through IMS but, for example, information as to which of the LB and the UB is preferred or which of Wi-Fi and LTE is specified may be transmitted with respect to each of IMS voice and IMS video may be transmitted.

Meanwhile, the UE may not have an LTE quota but may not have a Wi-Fi quota. In this case, there is an eNB supporting Wi-Fi, the UE may establish connection with the eNB. The eNB should prevent data from being transmitted to the UE through LTE. For this, in the present invention, when the UE establishes RRC connection, information as to whether the UE wants to use LTE and/or Wi-Fi may be transferred to the eNB or the MME.

The charging node (or the charging system) of the present invention may charge the UE differently according to a radio access technology (e.g., LTE or Wi-Fi) and/or the type of band (e.g., LB or UB) used between the eNB and the UE. For this, the present invention provides charging assistant information to the charging node. The charging assistant information may include the amount of data transmitted/received using a specific radio access technology, the amount of data transmitted/received in a specific type of band, etc.

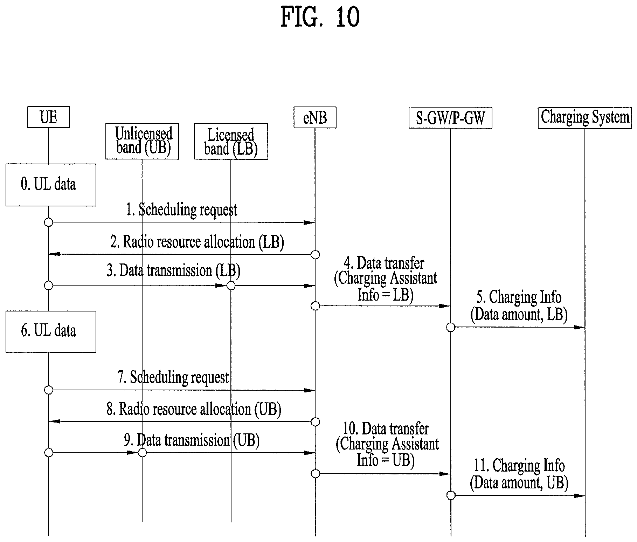

FIG. 10 is a view showing a data transmission/reception process according to the present invention.
> 0. UL data to be transmitted to the network is generated in the UE.
> 1. The UE informs the eNB that the data is generated in step 0, that is, there is uplink (UL) data to be transmitted to the network.
> 2. The eNB allocates radio resources for UL data transmission to the UE. For example, the eNB may instruct the UE to transmit the data in the LB.
> 3. The UE transmits the data through the radio resources allocated in step 2. For example, when the eNB instructs the UE to transmit the data in the LB, that is, when the LB is allocated as data transmission resources, the UE transmits the UL data in the LB according to the instruction of step 2.
> 4. The eNB transfers the UL data received in step 3 to the S-GW/P-GW. At this time, the eNB transfers information indicating that the UL data has been received in the LB together with the charging assistant information.
> 5. The P-GW/S-GW forwards the UL data received from the eNB to an external network and, at the same time, transfers, to the charging system, information indicating that the data has been transferred in the LB together with information on the amount of transferred data, using the charging assistant information transferred together with the UL data.
> 6. UL data to be transmitted to the network may be generated in the UE again.
> 7. The UE informs the eNB that the data is generated in step 6, that is, there is uplink (UL) data to be transmitted to the network.
> 8. The eNB allocates radio resources for transmission of the UL data generated in step 6. For example, in step 8, when the UE signals information indicating that the UB has better channel quality than the LB, the eNB may instruct the UE to transmit the data in the UB.
> 9. The UE transmits the UL data in the UL according to the instruction of step 8.
> 10. The eNB transfers the data received in step 9 to the S-GW/P-GW. At this time, the eNB transfers information indicating that the UL data has been received in the UB together with the charging assistant information.
> 11. The P-GW/S-GW forwards the UL data received from the eNB to an external network and, at the same time, transfers, to the charging system, information indicating that the data has been transmitted in the UB together with information on the amount of transferred data, using the charging assistant information transferred together with the UL data.

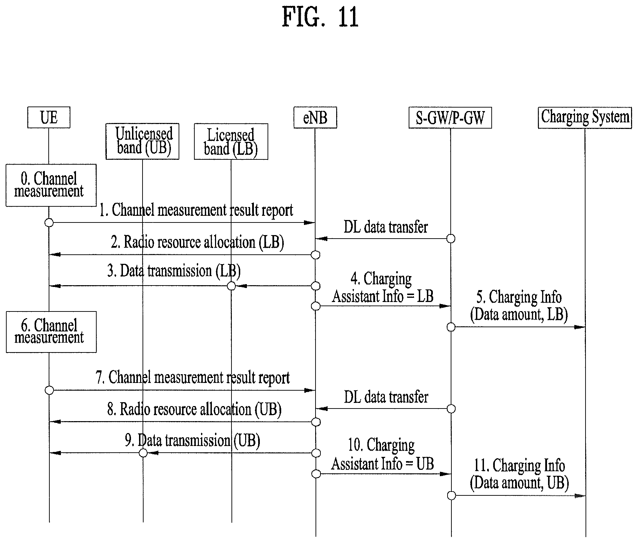

FIG. 11 is a view showing another example of a data transmission/reception process according to the present invention. In particular, FIG. 11 shows a DL data transmission/reception process.
> 0. The UE measures channel quality of the licensed band (LB) and the unlicensed band (UB). Measurement of the channel quality by the UE may be performed periodically or according to the request of the eNB.
> 1. The UE transfers channel quality information measured in step 0 to the eNB. The report of the channel quality information by the UE may be performed periodically or according to the request of the eNB.
> 2. The eNB allocates radio resources for DL data transmission (received from the S-GW/P-GW) to the UE based on the channel quality information received in step 1. For example, the eNB may inform the UE that the data will be transmitted in the LB.
> 3. The UE receives the data through the radio resources allocated in step 2. For example, when the eNB informs the UE that the data will be transmitted in the LB, that is, when the LB is allocated as DL data transmission resources, the UE receives the UL data in the LB according to the instruction of step 2.
> 4. The eNB transfers charging assistant information of the DL data transmitted in step 3 to the S-GW/P-GW. For example, the eNB provides information indicating that the DL data has been transmitted in the LB to the P-GW through the S-GW using the charging assistant information.
> 5. The S-GW/P-GW transfers information indicating that the DL data has been transmitted in the LB to the charging system together with information on the amount of transferred DL data, using the charging assistant information of the DL data transferred from the S-GW/P-GW to the eNB.
> 6. The UE measures channel quality of the LB and the UB again. Measurement of the channel quality by the UE may be performed periodically or according to the request of the eNB.
> 7. The eNB allocates radio resources for DL data transmission (received from the S-GW/P-GW) to the UE based on the channel quality information received in step 6. For example, the eNB may inform the UE that the data will be transmitted in the UB.
> 8. The UE transmits DL data through the radio resources allocated in step 7. For example, when the eNB informs the UE that the data will be transmitted in the UB, that is, when the UB is allocated as DL data transmission resources, the UE transmits the DL data in the UB according to the instruction of step 7.
> 9. The UE receives the DL data in the UB according to the instruction of step 8.
> 10. The eNB transfers the charging assistant information of the DL data transmitted in step 9 to the S-GW/P-GW. For example, the eNB provides information indicating that the DL data has been transmitted in the UB to the P-GW through the S-GW using the charging assistant information.
> 11. The S-GW/P-GW transfers information indicating that the DL data has been transferred in the UB to the charging system together with information on the amount of transferred DL data, using the charging assistant information of the DL data transferred from the S-GW/P-GW to the eNB.

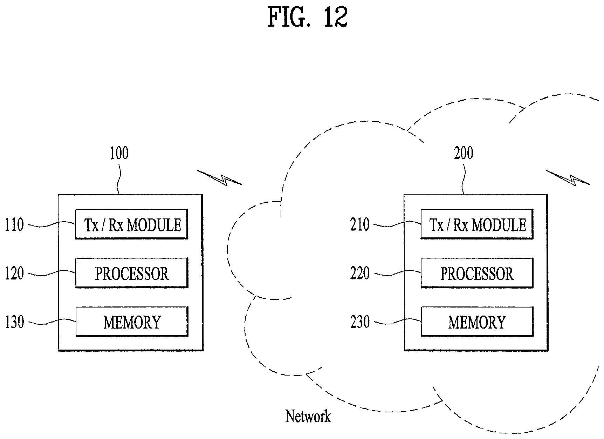

FIG. 12 illustrates configuration of a UE and a network node according to a preferred embodiment of the present invention.

The UE 100 according to the present invention may include a transceiver 110, a processor 120, and a memory 130. The transceiver 110 may be referred to as a radio frequency (RF) unit. The transceiver 110 may be configured to transmit and receive various signals, data and information to and from an external device. The UE 100 may be connected to the storage device by wire and/or wirelessly. The processor 150 may control overall operation of the UE 100, and be configured to calculate and process information for the UE 100 to transmit and receive to and from the external device. In addition, the processor 120 may be configured to perform the proposed operations of the UE. The memory 130 may store the calculated and processed information for a predetermined time, and may be replaced by another constituent such as a buffer (not shown).

Referring to FIG. 12, the network node 200 according to the present invention may include a transceiver 210, a processor 220 and a memory 230. The transceiver 210 may be referred to as an RF unit. The transceiver 210 may be configured to transmit and receive various signals, data and information to and from an external device. The network node 200 may be connected to the storage device by wire and/or wirelessly. The processor 220 may control overall operation of the network node 200, and be configured to calculate and process information for the network node 200 to transmit and receive to and from the external device. In addition, the processor 220 may be configured to perform the proposed operations of the network node. The memory 230 may store the calculated and processed information for a predetermined time, and may be replaced by another constituent such as a buffer (not shown).

For configuration of the UE 100 and the network apparatus, the details described in various embodiments of the present invention may be independently applied or implemented such that two or more embodiments are simultaneously applied. For simplicity, redundant description is omitted.

The embodiments of the present invention may be implemented through various means. For example, the embodiments may be implemented by hardware, firmware, software, or a combination thereof.

When implemented by hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, a method according to embodiments of the present invention may be embodied as an apparatus, a procedure, or a function that performs the functions or operations described above. Software code may be stored in a memory unit and executed by a processor. The memory unit is located at the interior or exterior of the processor and may transmit and receive data to and from the processor via various known means.

As described above, the detailed description of the preferred embodiments of the present invention has been given to enable those skilled in the art to implement and practice the invention. Although the invention has been described with reference to exemplary embodiments, those skilled in the art will appreciate that various modifications and variations can be made in the present invention without departing from the spirit or scope of the invention described in the appended claims. Accordingly, the invention should not be limited to the specific embodiments described herein, but should be accorded the broadest scope consistent with the principles and novel features disclosed herein.

### Industrial Applicability

The communication method described above is applicable to various wireless communication systems including IEEE 802.16x and 802.11x systems as well as a 3GPP system. Furthermore, the proposed method is applicable to a millimeter wave (mmWave) communication system using an ultrahigh frequency band.

## Claims

1. A method of transmitting data by a base station to a user equipment (UE) in a wireless communication system, the method comprising:
receiving downlink data for the UE from a core node;
transmitting the downlink data to the UE in at least one of a licensed band and an unlicensed band; and
sending, to the core node, information on the amount of data transmitted in the licensed band or the amount of data transmitted in the unlicensed band among the downlink data.

2. The method according to claim 1, further comprising:
providing the core node with radio access technology information indicating radio access technology applied to the data transmitted in the unlicensed band.

3. The method according to claim 2,
wherein the radio access technology information includes information on the amount of data transmitted using LTE or Wi-Fi in the unlicensed band.

4. The method according to claim 1,
wherein the core node is a packet data network gateway (P-GW).

5. The method according to claim 1,
wherein the core node is associated with a charging system.

6. A method of transferring data by a code node to a base station in a wireless communication system, the method comprising:
transferring downlink data for a user equipment (UE) to the base station; and
receiving, from the base station, information on the amount of data transmitted in a licensed band or the amount of data transmitted in an unlicensed band among the downlink data.

7. The method according to claim 6, further comprising:
receiving, from the base station, radio access technology information indicating radio access technology applied to the data transmitted in the unlicensed band.

8. The method according to claim 7,
wherein the radio access technology information includes information on the amount of data transmitted using LTE or Wi-Fi in the unlicensed band.

9. The method according to claim 6,
wherein the core node is a packet data network gateway (P-GW).

10. The method according to claim 6,
wherein the core node is associated with a charging system, and
wherein the charging system is configured to make different charges for data transmitted in the licensed band and data transmitted in the unlicensed band.

11. A base station for transmitting data to a user equipment (UE) in a wireless communication system, the base station comprising:
a transceiver; and
a processor configured to control the transceiver, the processor configured to:
control the transceiver to transmit downlink data for the UE received from a core node to the UE in at least one of a licensed band and an unlicensed band; and
control the transceiver to send, to the core node, information on the amount of data transmitted in the licensed band or the amount of data transmitted in the unlicensed band among the downlink data.

12. The base station according to claim 11,
wherein the processor is configured to further provide the core node with radio access technology information indicating radio access technology applied to the data transmitted in the unlicensed band.

13. The base station according to claim 12,
wherein the radio access technology information includes information on the amount of data transmitted using LTE or Wi-Fi in the unlicensed band.

14. The base station according to claim 11,
wherein the core node is a packet data network gateway (P-GW).

15. The base station according to claim 11,
wherein the core node is associated with a charging system.

16. A core node for transferring data to a base station in a wireless communication system, the core node comprising:
a transceiver; and
a processor configured to control the transceiver, the processor configured to:
control the transceiver to transfer downlink data for a user equipment (UE) to the base station; and
control the transceiver to receive, from the base station, information on the amount of data transmitted in a licensed band or the amount of data transmitted in an unlicensed band among the downlink data.

17. The core node according to claim 16,
wherein the processor is configured to further receive, from the base station, radio access technology information indicating radio access technology applied to the data transmitted in the unlicensed band.

18. The core node according to claim 17,
wherein the radio access technology information includes information on the amount of data transmitted using LTE or Wi-Fi in the unlicensed band.

19. The core node according to claim 6,
wherein the core node is a packet data network gateway (P-GW).

20. The core node according to claim 16,
wherein the core node is associated with a charging system, and
wherein the charging system is configured to make different charges for data transmitted in the licensed band and data transmitted in the unlicensed band.
